# EUROPÄISCHE PATENTSCHRIFT

(11) **EP 3 724 077 B1**
(45) Veröffentlichungstag und Bekanntmachung des Hinweises auf die Patenterteilung: **14.10.2026**
(21) Anmeldenummer: 18842511.0
(22) Anmeldetag: 13.12.2018
(51) Int. Cl.: B64F 1/00, B64F 1/22, B64F 1/30, B64C 29/00, B64C 39/02, B64C 39/00

(54) **START- UND LANDESTATION**
START AND LANDING STATION
STATION DE DÉCOLLAGE ET ATTERRISSAGE

(30) Priorität: 15.12.2017 DE 102017130251; 15.12.2017 DE 102017130252; 15.12.2017 DE 102017130253; 15.12.2017 DE 102017130255; 15.12.2017 DE 102017130254
(43) Veröffentlichungstag der Anmeldung: 21.10.2020
(73) Patentinhaber: GermaniumTech GmbH, 01328 Dresden (DE)
(72) Erfinder: WERNER, Jens, 01723 Wilsdruff STT Kesselsdorf (DE); PEZUS, Phil, 01723 Wilsdruff STT Kesselsdorf (DE); BIELER, Matthias, 01723 Wilsdruff STT Kesselsdorf (DE); FRANKE, Florian, 01723 Wilsdruff STT Kesselsdorf (DE)
(74) Vertreter: Lippert Stachow Patentanwälte Rechtsanwälte Partnerschaft mbB
(86) Internationale Anmeldenummer: PCT/DE2018/101020
(87) Internationale Veröffentlichungsnummer: WO 2019/114887

(56) Entgegenhaltungen:
- US-A- 1 912 723
- US-A- 5 842 667
- US-A1- 2008 111 021
- US-A1- 2016 144 982
- US-A1- 2016 200 438
- US-A1- 2016 257 424
- US-A1- 2016 376 031
- US-B1- 9 718 564
- US-B2- 9 505 493

## Beschreibung

Die Erfindung betrifft eine Start- und Landestation für ein senkrecht startendes und landendes Fluggerät zum Transport von Personen und/oder Lasten.

Fluggeräte zum Transport von Personen und/oder Lasten gewinnen zunehmend an Bedeutung, da sie eine schnelle Beförderung weitgehend unabhängig von Infrastruktureinrichtungen, wie z. B. Straßen, Schienen, Brücken, Tunnel usw., ermöglichen. Insbesondere trifft dies auf kleinere Fluggeräte zu, die senkrecht starten und landen können und daher keine Start- und Landebahn benötigen.

Dennoch hat sich auch für derartige Fluggeräte eine Bodenstation zum Landen und Starten als günstig erwiesen. Aus der WO 2013/055265 A1 ist ein System zum automatischen Starten und Landen von unbemannten Luftfahrzeugen bekannt. Das System verfügt über eine Bodenstation mit Mitteln zur Kommunikation mit den Luftfahrzeugen, eine Anordnung mit einem Greifarm zum Ergreifen und Starten eines Luftfahrzeugs, eine Berechnungseinheit zum Berechnen eines Treffpunkts zwischen Greifarm und Luftfahrzeug sowie eine Steuerungseinheit, wobei die Steuerungseinheit dazu ausgebildet ist, den Greifarm so zu steuern, dass ein Luftfahrzeug zwischen einer Aufbewahrungsposition und dem Treffpunkt bewegt werden kann.

Das beschriebene System eignet sich jedoch nur zur Abfertigung kleinerer, unbemannter Luftfahrzeuge am Boden. Zudem kann jeweils nur ein Luftfahrzeug und auch nur in seiner Gesamtheit /Ganzheit in der Bodenstation abgefertigt werden. US 2016/200438 A1 offenbart auch eine Landestation für ein Fluggerät.

Der Erfindung liegt daher die Aufgabe zu Grunde, eine effizientere Start- und Landestation für ein senkrecht startendes und landendes Fluggerät für Personen und/oder Lasten anzugeben. Diese Start- und Landestation soll zudem einen funktions- und gefährdungssicheren Start- und Landeprozess ermöglichen. Wünschenswert wäre zudem die Einbindung einer Logistik zum Management von Modulen des Fluggeräts.

Gelöst wird diese Aufgabe durch den Gegenstand des unabhängigen Anspruches. Vorteilhafte Weiterbildungen der Erfindung sind in den Unteransprüchen angegeben.

Die erfindungsgemäße Start- und Landestation ist speziell für ein senkrecht startendes und landendes, modulares Fluggerät zum Transport von Personen und/oder Lasten geeignet. Das Fluggerät, welches ein Flugmodul und ein mit dem Flugmodul kuppelbares Transportmodul aufweist, kann in der Start- und Landestation sowohl starten und landen als auch teilweise bzw. modular (in seine Module getrennt) zwischengelagert werden. Das Flugmodul weist eine Tragwerksstruktur mit mehreren an der Tragwerksstruktur angeordneten Antriebseinheiten auf.

Das Transportmodul weist eine Beförderungskapsel auf, welche der Umhüllung der zu transportierenden Personen und/oder Lasten dient, und im Weiteren eine Verbindungseinrichtung auf zur Verbindung der Beförderungskapsel mit dem Flugmodul.

Die Verbindungseinrichtung kann lösbar mit der Beförderungskapsel verbunden sein, so dass die Beförderungskapsel auch ohne der Verbindungseinrichtung handhabbar ist.

Die Verbindungseinrichtung kann einen längserstreckten Schaft aufweisen, der einen Endes eine Kupplungseinrichtung zur Verbindung mit dem Flugmodul aufweist und der anderen Endes an die Beförderungskapsel anschließt.

Der Schaft kann derart erstreckt ausgebildet sein, dass ein Sicherheitshöhenabstand der Kupplungseinrichtung oberhalb der Beförderungskapsel hergestellt ist, so dass ein entsprechender Sicherheitsabstand zwischen der Beförderungskapsel und dem Flugmodul im gekuppelten Zustand gewährleistet werden kann. Der Sicherheitshöhenabstand kann der Längserstreckung des Schafts entsprechen und ist derart bestimmt, dass eine das Transportmodul benutzende erwachsene Person aus dem Stand die Kupplungseinrichtung und das gekuppelte Flugmodul nicht berühren kann. Der Sicherheitshöhenabstand kann - ausgehend von einer nutzbaren Höhe der Beförderungskapsel von beispielsweise 2 m - mindestens 0,5 m, bevorzugt 1,0 m und weiter bevorzugt 1,50 m betragen.

Der Sicherheitshöhenabstand ist derart gewählt, dass ein Sicherheitsrisiko für das Transportmodul benutzende Personen minimiert wird, indem z. B. ein Kontakt einer solchen Person mit dem angekuppelten Flugmodul bei Benutzung des Transportmoduls vermieden wird.

Erfindungsgemäß weist die Start- und Landestation eine Haltevorrichtung mit mehreren Greifer- oder Auflageelementen zum Auflegen, Fixieren und/oder Ausrichten der Tragwerksstruktur beim Starten und Landen des Fluggerätes oder des Flugmoduls auf.

Diese Haltevorrichtung gewährleistet eine stabile und sichere Aufnahme und Halterung eines Fluggerätes der vorstehend beschriebenen Art oder auch eines von dem Transportmodul abgekoppelten Flugmoduls des Fluggerätes der vorstehend beschriebenen Art.

Die Haltevorrichtung kann vorzugsweise standfest gegenüber dem Gelände oder einer Gebäude-Plattform ausgebildet sein, wobei die an der Haltevorrichtung angeordneten Greifer- und Auflageelemente das Fluggerät bzw. das Flugmodul in einem sicheren Abstand über dem Gelände - bzw. Plattformniveau aufnehmen, halten und für den sicheren Start oder die sichere Landung des Fluggerätes oder des Flugmoduls in der Start- und Landestation das Flugmodul flugtechnisch optimal ausrichten.

Die kompakte funktionskonzentrierte Ausführung der erfindungsgemäßen Start- und Landestation ermöglicht damit eine Anordnung nicht nur auf dem Geländeboden, sondern beispielsweise auch auf oder an Gebäuden, Bauwerken oder anderen zugänglichen Objekten, wie z.B. Schiffe oder schwimmenden Plattformen.

Die Haltevorrichtung mit den Greifer- und Auflageelementen ist insbesondere derart ausgebildet, dass das Gewicht des Fluggerätes oder des Flugmoduls auch bei Betriebsstillstand der Antriebseinheiten /Propeller getragen werden kann.

Die Greifer- und Auflageelemente sind derart gestaltet und angeordnet, dass Beschädigungen des Flugmoduls bzw. Fluggeräts während des Starts und der Landung sicher vermieden werden können.

Einzelne oder alle Greifer- und Auflageelemente können beispielsweise in Form von stationären oder beweglichen, ein - oder mehrgliedrigen Greifarmen, in der Art von variablen Lineareinheiten oder ähnlichen mehrachsig agierenden, mechanischen Konstruktionen (wie z. B. Industrieroboter) ausgebildet sein.

Einige oder alle Greifer- und Auflageelemente können beispielsweise gabelförmig für die Auflage und teilweise seitliche Einfassung der Tragwerksbalken der Tragwerkstruktur ausgebildet sein, was eine höhere Sicherheit gegen seitliches Verrutschen der Auflageposition des Flugmoduls gewährleistet.

Einige oder alle Greifer- und Auflageelemente können aber auch beispielsweise balkenförmig für eine plane Auflage der Tragwerksbalken der Tragwerkstruktur ausgebildet sein, welche eine höhere Toleranz der Auflageposition des Flugmoduls erlaubt.

Eine Mehrzahl von Greifer- und Auflageelementen kann beispielsweise die Grundform eines ringförmigen oder eines hexagonförmigen Rahmens bilden. Die Abmessungen und die Anordnung der Greifer- und Auflageelemente können bevorzugt so gewählt sein, dass eine Auflage des Flugmoduls an bestimmten Auflagepunkten der Tragwerksstruktur erfolgt, die ausreichend beabstandet von der Anordnung der Antriebselemente des Flugmoduls sind.

Vorzugsweise sind die Greifer- und Auflageelemente derart angeordnet, dass sich die Auflagepunkte eines aufliegenden Flugmoduls in einem geringeren radialen Abstand gegenüber den einer Mittelachse des Flugmoduls am nächsten gelegenen Antriebselementen, so dass sich die Antriebselemente des Flugmoduls außerhalb des Wirkungsbereiche des Greifer- und Auflageelemente befinden und Behinderungen vermieden werden.

Das Landen des Fluggerätes bzw. des Flugmoduls kann optional so ausgeführt werden, dass das Fluggerät bzw. das Flugmodul sich der Start- und Landestation annähert und bei Erreichen einer vorgegebenen Annäherungszone von einem oder mehreren Greifer- und Auflageelementen erfasst wird.

Optional kann die Halteeinrichtung und/oder können die Greifer- oder Auflageelemente variabel bezüglich ihrer Länge ausgebildet, d. h. ausfahrbar, sein. Eine Längenvariation kann beispielsweise durch teleskopartiges Ineinanderverschieben mehrerer Segmente der Halteeinrichtung bzw. der Greifer- oder Auflageelemente erreicht werden. Dadurch wird eine Anpassung der Start- und Landestation an Fluggeräte bzw. Flugmodule unterschiedlicher geometrischer Ausgestaltung ermöglicht, so dass verschiedene Fluggeräte bzw. Flugmodule erfasst und gehalten, fixiert und/oder ausgerichtet werden können.

In einer vorteilhaften Ausführung weist die Haltevorrichtung mehrere längserstreckte, säulenförmige oder bogenförmige Ständer auf, womit eine solche beabstandete Aufnahme und Halterung des Flugmoduls bzw. Fluggerätes über dem Gelände - bzw. Plattformniveau erreicht werden kann, dass sich das gehaltene Flugmodul in sicherer Entfernung von einem Bewegungsraum der das Fluggerät nutzenden oder bedienenden Personen befindet.

Mehrere, vorzugsweis um den Umfang der Start- und Landestation verteilt angeordnete Ständer, verleihen der Haltevorrichtung einen besonders stabilen Stand gegenüber den von dem Fluggerät oder dem Flugmodul beim Starten und Landen verursachten statischen und dynamischen Lasten.

Vorzugsweise sind die Länge der Ständer verstellbar ausgebildet, womit das gehaltene Fluggerät oder das Flugmodul - insbesondere im Betriebsstillstand der Antriebseinheiten - gegenüber dem Gelände - bzw. Plattformniveau angehoben bzw. abgesenkt werden kann.

Damit kann das gehaltene Fluggerät beispielsweise sanft auf einem für dessen Abstellung vorgesehenen Untergrund abgestellt bzw. von dem Untergrund angehoben werden oder das Flugmodul kann zum Ankoppeln an ein darunter befindliche Transportmodul herabgeführt oder nach dem Abkoppeln vom Transportmodul angehoben werden.

Zu dem Zweck können die Ständer teleskopartig ausfahrbar bzw. einfahrbar ausgebildet sein, so dass sich die Ständer in Richtung ihrer Längsachse verlängern bzw. verkürzen können.

Nach einer besonderen Ausführungsform sind die Ständer und/oder die Greifer- und Auflageelemente der Haltevorrichtung federnd ausgebildet.

Sie sind insbesondere dazu ausgebildet, harte Landestöße eines Flugmoduls oder Fluggeräts abzufedern. Die Federung kann beispielsweise mittels eines in den Ständer oder in das Auflageelement integrierten elastischen, beispielsweise aus Gummi bestehenden, Federelements realisiert sein.

In einer vorteilhaften Ausführungsform weist die Start- und Landestation einen ersten Bereich, ausgebildet zur Anordnung des Transportmoduls für das An- und Abkuppeln an das / von dem Flugmodul, auf.

Der erste Bereich ist zur Anordnung und Lagerung eines Transportmoduls, um in Zuordnung zu einem Flugmodul ein modulares Fluggerät zusammenzustellen oder umgekehrt ein Fluggerät zu entkoppeln, wobei hierfür der erste Bereich einerseits zum Ankuppeln des hier positionierten Transportmoduls an das Flugmodul für das Starten des Fluggerätes und andererseits zum Abkuppeln und Lagern des Transportmoduls von dem Flugmodul nach dem Landen des Fluggerätes ausgebildet ist.

Mit anderen Worten kann im ersten Bereich das Transportmodul so passend zur Position des aufliegenden Flugmoduls platziert werden, dass eine Kupplung dieser beiden Module einfach und zügig möglich ist.

Ebenso können die Greifer- und Auflageelemente der Haltevorrichtung so ausgebildet und angeordnet sein, dass das Flugmodul passend zur Position des im ersten Bereich positionierten Transportmoduls positioniert werden kann.

Das Flugmodul kann nach dem Abkuppeln vom Transportmoduls und dem Anordnen des Transportmoduls im ersten Bereich des Start- und Landestation flexibel und eigenständig mobil weiter verwendet werden.

Der erste Bereich kann so ausgebildet sein, dass mehrere Fluggeräte, Flugmodule und /oder Transportmodule parallel und gleichzeitig abgefertigt werden können.

Der erste Bereich ist im Weiteren so ausgebildet, dass das Transportmodul auf dem Höhenniveau des umliegenden Geländes bzw. der umliegenden Plattform angeordnet werden kann, das heißt anordenbar ist.

Vorteilhafter Weise weist der erste Bereich wenigstens eine Aufnahmevorrichtung zur Aufnahme und Positionierung eines Transportmoduls, vorzugsweise einer Beförderungskapsel des Transportmoduls, auf.

Die Aufnahmevorrichtung dient der Zwischenlagerung und Positionierung des Transportmoduls, wobei die Aufnahmevorrichtung vorzugsweise die Beförderungskapsel des Transportmoduls hält, so dass die Beförderungskapsel auch gelöst von der Verbindungseinrichtung des Transportmoduls handhabbar ist, was insbesondere dann der Platzeinsparung dienen kann, sofern die Verbindungseinrichtung schaftartig, längserstreckt ausgebildet ist.

Die Aufnahmevorrichtung kann beispielsweise als ringförmige oder oben offene schalenförmige Umfassung der Beförderungskapsel ausgebildet sein, wodurch die Beförderungskapsel umfassend gehalten wird.

Bevorzugt korrespondiert die Form der Aufnahmevorrichtung mit der äußeren Form des jeweiligen Transportmoduls, so dass die Aufnahmevorrichtung das Transportmodul zumindest teilweise umschließen kann.

Mit anderen Worten kann die Aufnahmevorrichtung der Außenkontur des jeweiligen Transportmoduls bzw. der Beförderungskapsel folgen und an dieser soweit wie möglich bündig anliegen.

Die Aufnahmevorrichtung verfügt zudem über eine Möglichkeit zur Zentrierung und/oder Arretierung des aufgenommenen Transportmoduls oder der aufgenommenen Beförderungskapsel.

Dadurch kann eine sichere Aufbewahrung, eine exakte Positionierung und Führung des Transportmoduls bzw. Beförderungskapsel sowie deren sicheres Be- und Entladen ermöglicht werden. In oder an der Aufnahmevorrichtung kann ein Transportmodul oder eine Beförderungskapsel zur Flugvorbereitung und zur Ankupplung an das bereitgestellte Flugmodul gelagert und positioniert werden bzw. zur Flugnachbereitung vor oder nach dem Abkuppeln vom Flugmodul aufgenommen und gelagert werden.

Dabei kann die Aufnahmevorrichtung zur Aufnahme des Transportmoduls derart in Beziehung zur Haltevorrichtung zur Aufnahme des Flugmoduls angeordnet sein, dass eine bestimmte Betriebspositionierung des Flugmoduls bzw. des Fluggeräts, wie beispielsweise beim Startzustand und /oder beim Landezustand erforderlich, ermöglicht werden kann.

Nach einer vorteilhaften Ausführungsform weist der erste Bereich eine Hubeinrichtung zur Heben und Senken des Fluggerätes und/oder des Transportmoduls und/oder der Beförderungskapsel auf.

Somit kann beispielsweise das Transportmodul oder die Beförderungskapsel nach dem Entkopplung vom Flugmodul und /oder von der Verbindungseinrichtung des Transportmoduls auf ein Gelände - bzw. Plattformniveau abgesenkt werden und/oder vor den Ankoppeln des Transportmoduls an das Flugmodul von einem Gelände - bzw. Plattformniveau angehoben werden, um beispielsweise ein komfortablen Ein- und Ausstieg für die Personen oder eine leichtere Be- und Entladung des Transportmoduls zu gewährleisten.

Nach der Erfindung weist die Start- und Landestation eine Abschirmeinrichtung auf, ausgebildet zur Abschirmung einer in der Start- und Landestation befindlichen Beförderungskapsel gegenüber dem Flugmodul.

Die Abschirmeinrichtung dient der Abschirmung eines oder mehrerer in der Start- und Landestation angeordneten der Beförderungskapsel(n) des Transportmoduls/der Transportmodule gegenüber dem oder den Flugmodul(en) ausgebildet.

Die Abschirmeinrichtung erzeugt eine räumlichen Trennung zwischen Flugmodul und Beförderungskapsel des gelandeten Fluggeräts in der Art einer Schirm- oder Dachkonstruktion und erhöht damit die Sicherheit und den Komfort für die zu befördernden Personen und/oder für das Bedienpersonal zu Bedienung der mit dem Transportmodul zu befördernden Lasten.

Die Abschirmeinrichtung in der Art einer Schirm- oder Dachkonstruktion ist an der Haltevorrichtung befestigt und ist vorzugsweise unterhalb der Position der Antriebseinheiten /Propeller des Flugmoduls eines in der Start- und Landestation aufgenommenen Fluggerätes jedoch zumindest oberhalb des ersten Bereiches angeordnet. Die Abschirmeinrichtung in der Art einer Schirm- oder Dachkonstruktion kann den ersten Bereich und mögliche weitere Bereiche der Start- und Landestation teilweise oder vollständig überspannen.

Durch eine derartige Abschirmeinrichtung kann die Start- und Landestation auch während des Betriebes des Flugmoduls geschützt werden, wodurch die Start- und Landestation fortwährend nutzbar sein kann. Insbesondere ist dadurch ein sicheres und komfortables Be- und Entladen der Transportmodule bzw. ein sicheres Ein- und Aussteigen für Passagiere ermöglicht, womit die Sicherheit und der Komfort der Start- und Landestation weiter erhöht werden kann.

Vorteilhafter Weise weist die Abschirmeinrichtung eine verstellbare Öffnung auf, wobei die Öffnung bis zu ihrem vollständigen Verschluss und vorzugsweise in ihrem Öffnungsquerschnitt verstellbar ausgebildet ist. Beispielsweise kann die Öffnung in der Art einer Irisblende ausgebildet sein. Die Öffnung kann temporär teilweise oder ganz verschlossen werden, sowohl in Anwesenheit als auch in Abwesenheit des Fluggeräts oder der Fluggeräte.

Die Öffnung kann zum Starten und Landen des Fluggeräts derart geöffnet werden, so dass insbesondere die ausladende Beförderungskapsel durch die verstellbare Öffnung hindurchgeführt werden kann.

Im gelandeten Zustand des Fluggeräts und im abgekoppelten Zustand des Transportmoduls kann die Öffnung ganz geschlossen sein oder derart teilweise geschlossen werden, dass eine längserstreckte Verbindungseinrichtung des Transportmoduls eng oder dicht von der verschließbaren Öffnung umschlossen wird, so dass auch beim Vorhandensein der Verbindungseinrichtung eine gute Abschirmung der Beförderungskapsel vom Flugmodul erreicht werden kann.

Mittels der zumindest teilweise geschlossenen Abschirmeinrichtung kann die Sicherheit und den Komfort beim Ein- und Austeigen bzw. Be- und Entladen der Beförderungskapsel noch weiter erhöht werden, da sich insbesondere die im ersten Bereich der Start- und Landestation befindliche Beförderungskapsel ausreichend geschützt gegenüber den rotierenden Antriebsmitteln /Propeller des darüber befindlichen Flugmoduls angeordnet ist.

Die Abschirmeinrichtung kann somit zudem eine Nutzung speziell des ersten Bereichs der Start- und Landestation auch während eines Betriebs des Flugmoduls, z. B. bei rotierenden Propellern, ermöglichen, so dass Einstiegs- und Ausstiegszeiten bzw. Be- und Entladezeiten verkürzt werden können.

Die Abschirmeinrichtung kann witterungsabweisend ausgebildet sein und damit dem Schutz der Bestandteile zumindest des ersten Bereichs der Start- und Landestation und zumindest der den ersten Bereich nutzenden Personen vor Witterungseinflüssen dienen.

Die Abschirmeinrichtung kann teilweise lichtdurchlässig, z. B. aus Glas, ausgebildet sein.

Die Abschirmeinrichtung weist Windleitlamellen auf.

Die Windleitlamellen sind so angeordnet und ausgebildet, dass die von einem startenden oder landenden Flugmodul bzw. Fluggerät erzeugten Abwinde gezielt abgelenkt und abgeleitet werden.

Die Windleitlamellen können z. B. als radial nach außen weisende, ringförmige, und/oder geschwungene Platten, aus beispielsweise Glas, ausgeführt sein. Die Windleitlamellen können horizontal überlappend und vertikal zu einander beabstandet angeordnet sein.

Gemäß verschiedenen Ausführungsvarianten kann die Start- und Landestation mindestens einen weiteren, zweiten Bereich aufweisen, wobei der zweite Bereich zur Aufbewahrung eines oder mehrerer Transportmodule oder eines oder mehrerer Beförderungskapseln des Fluggerätes ausgebildet ist.

Der zweite Bereich ist zur Aufbewahrung eines kompletten Transportmoduls oder einer Beförderungskapsel (ohne Verbindungseinrichtung) ausgebildet, bevorzugt zur Aufbewahrung mehrerer Beförderungskapseln oder Transportmodule ausgebildet. Gemäß verschiedenen Ausführungsvarianten können der erste und zweite Bereich oder weitere Bereiche direkt aneinander angrenzen, so dass die jeweiligen Beförderungskapseln bzw. Transportmodule nach dem Landen oder vor dem Starten des Fluggerätes einfach und auf kurzem Wege vom ersten in den zweiten Bereich oder weitere Bereiche bzw. umgekehrt bewegt werden können. Bevorzugt kann der zweite Bereich den ersten Bereich teilweise oder vollständig umschließen.

Dadurch kann die Start- und Landestation kompakt und platzsparend ausgebildet werden, wobei eine freie Zugänglichkeit der im zweiten Bereich aufbewahrten Transportmodule bzw. Beförderungskapseln gewährleistet werden kann, während der Zugang zum ersten Bereich, welcher dem Flugbetrieb vorbehalten ist, besser kontrollierbar ist.

Für einen bequemen, wechselseitigen Zugang der beiden Bereiche können der erste und der zweite Bereich in einer Ebene, beispielsweise auf einem Gelände- oder Gebäude-Plattformniveau oder parallel zu dem Gelände- oder Gebäude-Plattformniveau, angeordnet sein und über eine gemeinsame Ebene zugänglich sein.

Der erste Bereich wie der zweite Bereich können auch über mehrere Ebenen hinweg ausgebildet sein.

Es können mehrere erste Bereiche vorgesehen sein, die dem zweiten Bereich zuordenbar sind.

Der erste und zweite Bereich können gemäß weiteren verschiedenen Ausführungsvarianten mittels einer verschließbaren Trenneinrichtung, z. B. einer Trennwand mit verschließbarer Öffnung, räumlich voneinander getrennt sein.

Damit kann der erste Bereich lediglich über einen kontrollierbaren Ein- bzw. Ausgang erreichbar sein.

Beispielsweise kann als Ein- bzw. Ausgang eine Drehtür oder eine Schiebetür in der Trenneinrichtung angeordnet sein.

Damit kann der unmittelbare Start- und Ladebereich des Flugmoduls vor unbefugtem oder unerwünschtem Zutritt gesichert werden, was insbesondere der Sicherheit der Start- und Landestation vor gefährdenden Betriebssituationen dient.

Die Trenneinrichtung kann beispielsweise zur Sichtkontrolle oder aus Sicherheits- oder Komfortabilitätsgründen transparent oder teiltransparent ausgebildet sein.

Die Start- und Landestation kann über eine Kameraüberwachung des ersten und/oder zweiten Bereichs verfügen. Dadurch kann beispielsweise sichergestellt werden, dass ein Starten oder Landen erst durchgeführt werden kann, nachdem die Unversehrtheit des ersten Bereichs bestätigt wurde.

Darüber hinaus kann die Start- und Landestation eine Kommunikationseinrichtung, beispielsweise eine Bodenkontrollstation, aufweisen. Die Kommunikationseinrichtung kann zur internen und/oder externen Kommunikation ausgebildet sein, wobei unter interner Kommunikation die Kommunikation der Bodenkontrollstation mit in der Start- und Landestation vorhandenen oder sich nähernden Fluggeräten, oder deren Module, wie Flug- oder Transportmodule, um beispielsweise die Landungen und Starts vorzugbereiten oder durchzuführen. Die interne Kommunikation kann z. B. des Weiteren die Verständigung über freie Kapazitäten, z. B. die Anzahl und die Beschaffenheit der zur Verfügung stehenden Transportmodule, Wartungs- und Reparaturbedarf oder die Unversehrtheit des ersten Bereichs für Start- und Landevorgänge umfassen.

Die externe Kommunikation der Bodenkontrollstation betrifft beispielsweise die Kommunikation mit der Flugsicherung, um die Flüge dort anzumelden und die Flug-Freigabe zu erhalten, oder Informationen von Wetterdiensten einzuholen. Diese externe Kommunikation ist vergleichbar mit dem Tower eines Flughafens, der den einzelnen Flugzeugen nach Rücksprache mit der Flugsicherung Start- und Landeerlaubnis erteilt.

Weiterhin kann die Start- und Landestation eine Anzeigeeinrichtung aufweisen, welche Benutzern oder Bedienern einen Status des Flugmoduls, Transportmoduls und/oder der Start- und Landestation anzeigen kann. Dadurch können beispielsweise Passagiere einer bestimmten Beförderungskapsel bzw. einem bestimmten Transportmodul zugewiesen werden oder es können Wartezeiten angezeigt werden.

Die Start- und Landestation ermöglicht eine effektive, komfortable und sichere Transportlogistik, da die im zweiten Bereich aufbewahrten Transportmodule bei Bedarf zügig in den ersten Bereich überführt und dort mit einem Flugmodul zum Fluggerät gekuppelt werden können, um anschließend zu starten. Dadurch besteht auch die Möglichkeit, Beförderungskapseln bzw. Transportmodule unterschiedlicher Ausstattung, z. B. für Lastentransport, für Personentransport etc., im zweiten Bereich zu bevorraten, um bei Bedarf schnell auf die Auswahl an Beförderungskapseln / Transportmodulen zugreifen zu können. Andererseits besteht die Möglichkeit ein mit dem Flugmodul im ersten Bereich gelandetes Transportmodul zügig in den zweiten Bereich zu überführen und zum Weiterflug des Fluggerätes bedarfsweise gegen ein anderes Transportmodul auszutauschen.

Gemäß weiteren verschiedenen Ausführungsvarianten kann der erste Bereich gegenüber dem zweiten Bereich vertikal verstellbar ausgebildet sein. Mit anderen Worten kann die Ebene des erste Bereich beispielsweise über die Ebene des zweiten Bereichs erhöht oder unter die Ebene des zweiten Bereichs abgesenkt werden. Dies kann beispielsweise mittels einer Hubeinrichtung des ersten Bereichs und/oder einer Hubeinrichtung des zweiten Bereichs erfolgen.

Dadurch kann die Positionierung des Transportmoduls und des Flugmoduls zueinander universeller gestaltet und einfacher justiert werden. Z. B. können Transportmodule unterschiedlicher Höhe dem Flugmodul zugeordnet werden.

Weiterhin besteht zur Erhöhung der flexiblen und schnellen Zuordenbarkeit der Transportmodule zwischen dem ersten und zweiten Bereich die Möglichkeit, den zweiten Bereich gegenüber dem ersten Bereich horizontal bewegbar, z. B. drehbar, auszubilden. Dies kann beispielsweise mittels einer Verfahr- oder Dreheinrichtung des ersten Bereichs und/oder einer Verfahr- oder Dreheinrichtung des zweiten Bereichs erfolgen.

Gemäß weiteren verschiedenen Ausführungsvarianten kann die Start- und Landestation ein Logistiksystem zum Organisieren der Transportmodule oder der Beförderungskapseln im ersten und zweiten Bereich aufweisen. Das Logistiksystem kann einen einfachen und sicheren Transport der Transportmodule oder der Beförderungskapseln vom ersten in den zweiten Bereich sowie umgekehrt ermöglichen, indem beide Bereiche mittels des Logistiksystems miteinander verbunden sind.

Beispielsweise kann das Logistiksystem über ein Förderband oder eine Förderschiene zur Beförderung der Transportmodule oder der Beförderungskapseln mit oder ohne einer Aufnahmevorrichtung verfügen. Beispielsweise können mittels des Förderbands oder der Förderschiene die Transportmodule aufliegend bzw. hängend entlang einer definierten Förderlinie befördert werden.

Zur Erhöhung der Sicherheit kann vorgesehen sein, dass das Logistiksystem lediglich durch eine verschließbare Öffnung in einer räumlichen Abtrennung zwischen dem ersten und zweiten Bereich führt, welcher nicht zugleich die verschließbare Trenneinrichtung zum Zu- und Ausgang der Personen ist.

Alternativ oder zusätzlich kann das Logistiksystem auch einen Transport der Transportmodule innerhalb des zweiten Bereichs ermöglichen, so dass beispielsweise zu be- oder entladende Transportmodule in einer Be- oder Entladeposition des zweiten Bereichs angeordnet werden können, während übrige Transportmodule in einer Warteposition des zweiten Bereichs angeordnet sein können.

Gemäß weiteren Ausführungsvarianten kann das Logistiksystem mehrere Aufnahmevorrichtungen zur Aufnahme und Positionierung der Transportmodule oder Beförderungskapseln, z. B. während derer Aufbewahrung im zweiten Bereich und/oder derer temporären Anordnung im ersten Bereich, aufweisen.

Die Aufnahmevorrichtungen können also im ersten und/oder zweiten Bereich angeordnet sein, wobei vorzugsweise jeweils eine Aufnahmevorrichtung in den ersten Bereich ein- und ausförderbar ist.

Die Aufnahmevorrichtungen können beispielsweise mit dem Förderband oder der Förderschiene oder untereinander ein- und auskuppelbar verbunden sein und auf diese Weise bewegt werden.

Vorzugsweise können die Aufnahmevorrichtungen auch in sich, d. **h.** um eine eigene Achse, drehbar ausgebildet sein.

Es können spezifisch ausgebildete Aufnahmevorrichtungen passend für Transportmodule zur Personenbeförderung bzw. für Transportmodule zur Lastenbeförderung ausgebildet sein.

Die Aufnahmevorrichtungen können zudem zur induktiven elektrischen Aufladung eines Energiespeichers des eingelagerten Transportmoduls ausgebildet sein.

Die im zweiten Bereich befindlichen Aufnahmevorrichtungen können bevorzugt konzentrisch um einen Mittelpunkt oder eine Mittelachse des ersten Bereiches anordenbar und förderbar sein, **d. h.** die Förderlinie der Aufnahmevorrichtungen kann **z. B.** kreisförmig oder entsprechend der Kontur eines Vielecks ausgebildet sein, wobei die Kontur des Kreises bzw. des Vielecks symmetrisch um eine gemeinsame Mitte mit dem Mittelpunkt oder der Mittelachse des ersten Bereichs angeordnet ist.

In Zusammenwirken der verschiedenen Ausführungsvarianten kann eine exakte und effiziente Logistik der Transportmodule sowohl untereinander als auch beim Zuordnen der Transportmodule zu dem Flugmodul und beim Be- und Entladen der Transportmodule erzielt werden, die die Abfertigungsvorgänge in der Start- und Landestation vereinfacht und sicherer macht.

Gemäß weiteren Ausführungsvarianten kann die Start- und Landestation ein oder mehrere Lademodul(e) aufweisen.

Das Lademodul kann ein Fluggerät, insbesondere ein Transportmodul und/oder ein Flugmodul, elektrisch laden.

Jedes Lademodul kann ein oder mehrere wiederaufladbare Energiespeicher, z. B. in Form von wiederaufladbaren Akkumulatoren oder Superkondensatoren, eine Ladeeinrichtung und/oder Solarzellen aufweisen. Die wiederaufladbaren Energiespeicher können in und/oder an der Start- und Landestation angeordnet sein, während die Solarzellen an der äußeren Oberfläche der Start- und Landestation, beispielsweise an der Abschirmeinrichtung, befestigt sein können.

Mittels der Greifer- oder Auflageelementen der Halteeinrichtung kann das Fluggerät bzw. das Flugmodul so ausgerichtet werden, dass eine Verbindung zu einer Ladeeinrichtung des Lademoduls zur Energieversorgung des Flugmoduls ermöglicht wird.

Die Ladeeinrichtung kann zur Übertragung von elektrischer Energie von einem externen Energieversorgungsnetz in den/die Energiespeicher, beispielsweise mit Hilfe einer kuppelbaren /steckbaren elektrischen Verbindung, ausgebildet sein.

Die Ladeeinrichtung kann an der Halteeinrichtung oder an der Abschirmeinrichtung angeordnet sein.

Die Energiespeicher können zur Speicherung der übertragenen und/oder mittels der Solarzellen eigenerzeugten elektrischen Energie und zur Energieversorgung der Start- und Landestation und/oder eines aufgenommenen Transportmoduls, Flugmoduls oder Fluggeräts ausgebildet sein.

Hierdurch kann die Start- und Landestation energetisch autark ausgebildet werden, da die Stromversorgung der Start- und Landestation und der abzufertigenden Module (Transportmodule, Flugmodule) innerhalb der Start- und Landestation und temporär unabhängig von der externen Energieversorgung erfolgen kann.

Bevorzugt ist das Lademodul zum induktiven Laden der Energiespeicher ausgebildet, so dass die Notwendigkeit einer Kabelverbindung entfällt.

Bevorzugt kann das Lademodul zum Laden eines wiederaufladbaren Energiespeichers des Flugmoduls und/oder zum Laden wiederaufladbarer Energiespeicher eines oder mehrerer Transportmodule ausgebildet sein.

Mehrere Lademodule können mehrere Fluggeräte, insbesondere mehrere Transportmodule und/oder Flugmodule parallel elektrisch laden, wodurch die Aufenthalts- und Wartungsdauer des oder der Fluggeräte minimiert werden kann und damit die Effizienz der Start- und Landestation erhöht werden kann.

Weitere Vorteile der vorliegenden Erfindung sind aus den Abbildungen sowie der zugehörigen Beschreibung ersichtlich. Es zeigen:
- Figur 1: beispielhafte Darstellung einer Start- und Landestation mit Fluggerät;
- Figur 2: beispielhafte Darstellung einer weiteren Start- und Landestation mit Fluggerät;
- Figur 3: schematische Darstellung der Seitenansicht einer Start- und Landestation; und
- Figur 4: schematische Darstellung der Draufsicht auf eine Start- und Landestation.

In den im Folgenden erläuterten Beispielen wird auf die beigefügten Zeichnungen Bezug genommen, die einen Teil der Beispiele bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres" usw. mit Bezug auf die Orientierung der beschriebenen Figuren verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekuppelt" verwendet zum Beschreiben sowohl einer direkten als auch einer indirekten Verbindung, eines direkten oder indirekten Anschlusses sowie einer direkten oder indirekten Kupplung. In den Figuren werden identische oder ähnliche Elemente mit identischen Bezugszeichen versehen, soweit dies zweckmäßig ist.

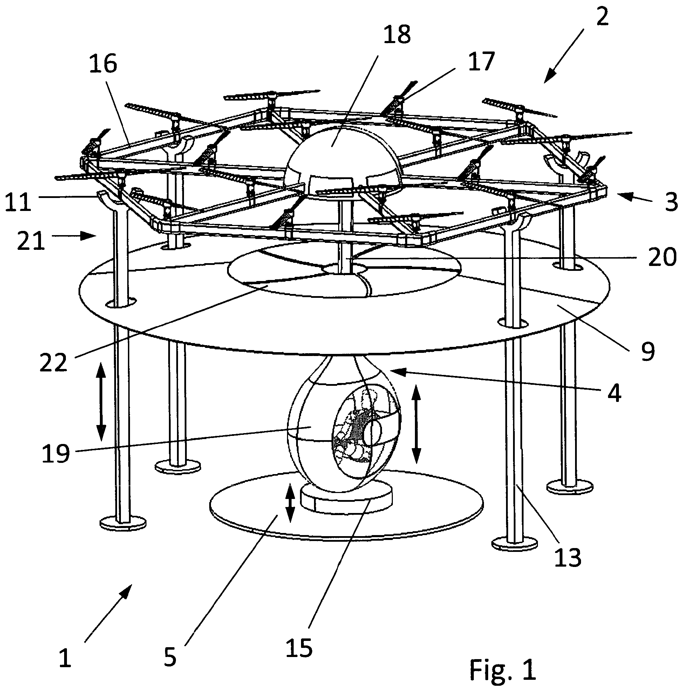

Figur 1 zeigt eine Start- und Landestation 1 mit einem darin angeordneten senkrecht startenden und landenden Fluggerät 2.

Das in der Start- und Landestation 1 angeordnete Fluggerät 2 weist ein Flugmodul 3 und ein mit dem Flugmodul 3 gekuppeltes Transportmodul 4 auf.

Die Start- und Landestation 1 weist einen ersten, inneren Bereich 5 auf, der in Figur 1 schematisch kreisförmig dargestellt ist. Der erste, innere Bereich ist zum Starten und Landen des Fluggeräts 2 ausgebildet ist. In dem Bereich ist das Transportmodul 4 zum An- oder Abkuppeln an das Flugmodul 3, zum Ein- und Aussteigen von Personen oder zum Be- und Entladen von Lasten angeordnet.

Das Transportmodul 4 weist eine tropfenförmig ausgebildete Beförderungskapsel 19 sowie eine lösbare Verbindungseinrichtung 20 auf. Die Verbindungseinrichtung 20 umfasst einen längserstreckten Schaft und eine Kupplungseinrichtung, um die Beförderungskapsel 19 in einem sicheren Abstand mit dem Flugmodul 3 zu verbinden.

Das Flugmodul 3 weist mehrere, an einer Tragwerksstruktur 16 in einer Ebene angeordnete Antriebseinheiten 17 auf, wobei jede Antriebseinheit 17 einen Elektromotor und einen mit dem Elektromotor in Wirkverbindung stehenden Propeller aufweisen kann. Im Zentrum des Flugmoduls 3 ist eine Zentraleinheit 18 mit einer Kupplungseinrichtung vorhanden, an der das Transportmodul 4 ankuppelbar ist.

Die Start- und Landestation 1 umfasst weiter eine Haltevorrichtung 21 zum Halten des Flugmoduls 3 beim Starten und Landen des Fluggerätes 2. Die Haltevorrichtung 21 weist vier Ständern 13 auf, die um den ersten, inneren Bereich 5 der Start- und Landestation angeordnet und in einem Geländeuntergrund verankert sind. Am oberen Ende der Ständer 13 ist jeweils ein gabelförmiges Greifer- und Auflageelement 11 angeordnet.

Mittels der vier Greifer- und Auflageelemente 11 der Haltevorrichtung 21 kann das Flugmodul 3 - mit oder ohne angekuppelten Transportmodul 4 - an dessen Tragwerksstruktur 16 gehalten, positioniert und fixiert werden. Es kann auch eine abweichende Anzahl Ständern 13 und Greifer- und Auflageelemente 11 vorgesehen sein.

Die Greifer- und Auflageelemente 11 sind gummiummantelt und in sich federnd ausgebildet, um harte Landestöße beim Landen des Fluggerätes 2 oder des Flugmoduls abzufedern. liegt die Tragwerksstruktur 16 des Flugmoduls 3 auf dem Auflageelement 11 auf

Das Flugmodul 3 liegt im Stillstands-Zustand des Fluggerätes 2 mit der Unterseite der Tragwerksstruktur 16 auf den gabelförmigen, nach oben offenen Greifer- und Auflageelementen 11 auf, so dass diese ausreichend von den Antriebselemente 17 des Flugmoduls 3 beabstandet sind.

Die Ständer 13 sind längenverstellbar ausgebildet (angedeutet durch die wechselgerichteten Pfeile), womit das durch die Greifer- und Auflageelementen 11 gehaltene Fluggerät 2 von einer Plattform 15 des ersten Bereiches 5 angehoben bzw. auf die Plattform 15 abgesenkt werden kann. In der Plattform 15 des ersten Bereiches ist eine vertikal verstellbare Hubeinrichtung 15 integriert (angedeutet durch die wechselgerichteten Pfeile), um das Fluggerät oder das entkuppelte Transportmodul 4 oder nur die Beförderungskapsel 19 heben oder senken zu können und insbesondere das Transportmodul 4 zum An- oder Abkuppeln in Bezug zum Flugmodul 3 positionieren zu können.

Außerdem weist die Start- und Landestation eine Abschirmeinrichtung 9 auf, die beispielsweise wie in Figur 1 gezeigt in der Art eines Schirms flächig oder leicht gewölbt und kreisförmig begrenzt ausgebildet sein kann, und zumindest den ersten Bereich 5 überspannt. Die Abschirmeinrichtung 9 kann freitragend ausgebildet sein oder, wie in dem Beispiel nach Fig. 1 vorgesehen, an der Haltevorrichtung 21 befestigt sein.

Die Abschirmeinrichtung 9 verfügt über einen zentral, oberhalb des ersten Bereichs 5 angeordnete, verschließbare Öffnung 22 in der Art einer Irisblende, die bei Anwesenheit des Fluggerätes 1 oder eines Transportmoduls 4 im ersten, inneren Bereich 5 teilweise geschlossen sein kann, indem sie die Verbindungseinrichtung 20 des Transportmoduls 4 umschließt, und bei Abwesenheit des Fluggerätes 1 oder eines Transportmoduls 4 oder einer Verbindungseinrichtung 20 des Transportmoduls 4 vollständig geschlossen werden kann. D.h. auch bei Anwesenheit nur eines Flugmoduls 3, das oberhalb des ersten, inneren Bereichs 5 von der Haltevorrichtung 21 gehalten wird, kann die Öffnung 22 vollständig geschlossen werden.

Der erste, innere Bereich kann Einrichtungen zur Stromversorgung der Start- und Landestation 1 aufweisen, optional zur Stromversorgung eines integrierten Lademoduls sowie optional zur direkten oder indirekten Stromversorgung des Fluggeräts 2 bzw. dessen Module (Flugmodul 3, Transportmodul 4).

Zudem kann eine Kommunikationseinrichtung zur internen und externen Kommunikation vorgesehen sein. Weiterhin kann eine Überwachungseinrichtung vorhanden sein, mittels der zumindest der innere Bereich 5 überwacht werden kann, so dass ein Start oder eine Landung erst dann durchgeführt werden kann, wenn die Unversehrtheit des inneren Bereichs 5 bestätigt wurde.

Weiter kann der erste Bereich 5 ein mechanisches und/oder elektronisches System zur Orientierung und/oder Führung des Flugmoduls 3 oder des Fluggeräts 2 bei Start und Landung aufweisen.

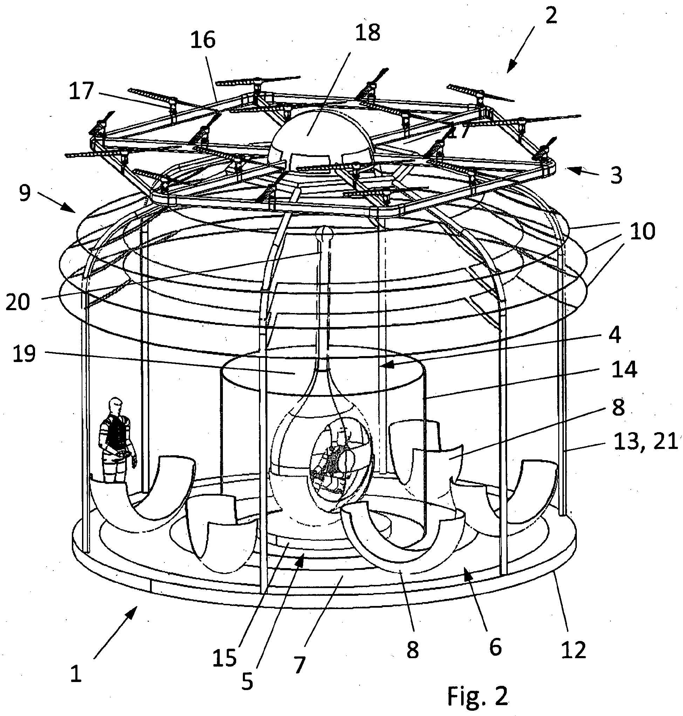

Figur 2 zeigt eine weitere Ausgestaltung der Start- und Landestation 1 mit einem senkrecht startenden und landenden Fluggerät 2, welches ein Flugmodul 3 und ein mit dem Flugmodul 3 gekuppeltes Transportmodul 4 aufweist.

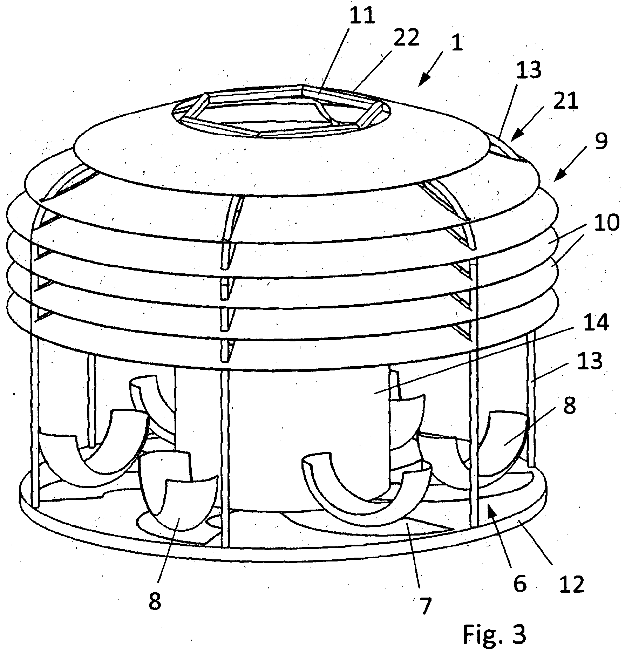

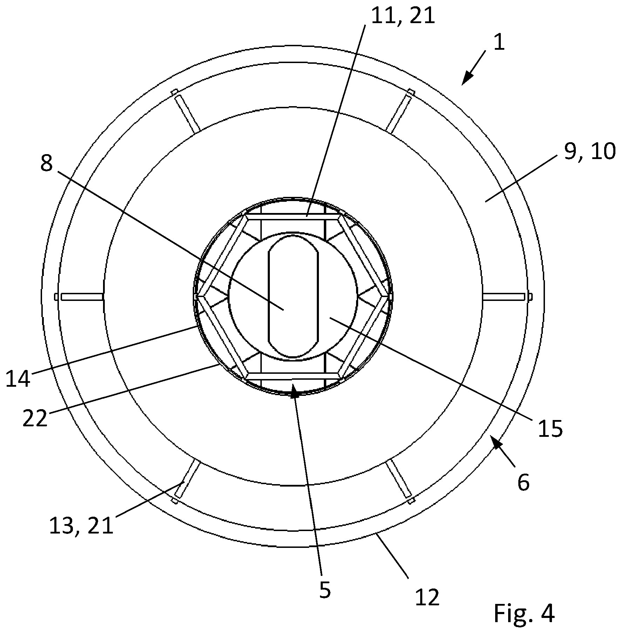

Die Figuren 3 und 4 zeigen die in Figur 2 dargestellte Start- und Landestation 1 schematisch in unterschiedlichen Ansichten.

Nachfolgend werden lediglich die Unterschiede zur Ausführung der Start- und Landestation 1 nach Fig. 1 beschreiben.

Die Start- und Landestation 1 nach Fig. 2 weist neben dem ersten, inneren Bereich 5 einen zweiten, äußeren Bereich 6 auf, der den ersten Bereich 5 kreisringförmig und vollständig umschließt. Der zweite Bereich 6 ist zur Aufbewahrung einer Vielzahl von Transportmodule 4 (nicht dargestellt) ausgebildet. Damit ist der erste Bereich 5 der Start- und Landestation 1 nach Fig. 2 in Funktionserweiterung zur temporären Anordnung eines Transportmoduls 4 bezüglich des Flugmoduls 3 ausgebildet.

Konstruktiv umfasst der zweite Bereich der Start- und Landestation 1 nach Fig. 2 eine Grundplatte 12, auf der die Säulen 13 der Haltevorrichtung 21 gründen. Die Säulen 13 sind gebogen ausgebildet, um eine als Dachkonstruktion ausgebildeten Abschirmeinrichtung 9 zu tragen, die den ersten und zweiten Bereich 5, 6 überspannt. Die Dachkonstruktion 9 weist Windleitlamellen 10 auf, die im Ausführungsbeispiel als nach außen geschwungene, kreisringförmige Glasplatten ausgeführt sind, um den Abwind der Antriebseinheiten 17 des Flugmoduls 3 und Witterungseinflüsse abzuhalten.

Ein oberer Rand der verschließbaren Öffnung 22 in der Abschirmeinrichtung 9 oberhalb des ersten Bereichs 5 wird von mehreren balkenförmigen, hexagonal angeordneten, mit einander verbundenen Auflageelementen 11 gesäumt (siehe näher Figuren 3 und 4). Die balkenförmigen Auflageelemente 11 sind gummiummantelt und federnd ausgebildet, um harte Landestöße des Flugmoduls 3 beim Landen abzufedern. Im Stillstands-Zustand des Fluggerätes 2 liegt die Unterseite der Tragwerksstruktur 16 des Flugmoduls 3 auf den balkenförmigen Auflageelementen 11 auf, womit diese ausreichend von den Antriebselemente 17 des Flugmoduls 3 beabstandet sind.

Die Grundplatte 12 kann die Einrichtungen zur Stromversorgung der Start- und Landestation 1 aufweisen, optional zur Stromversorgung eines integrierten Lademoduls sowie optional zur direkten oder indirekten Stromversorgung des Fluggeräts 2 bzw. dessen Module (Flugmodul 3, Transportmodul 4).

Zudem kann in der Grundplatte 12 die technische Ausstattung für die Kommunikationseinrichtung und die Überwachungseinrichtung vorgesehen sein.

Der erste und zweite Bereich 5, 6 sind mittels einer Trenneinrichtung 14 räumlich voneinander getrennt. Die Trenneinrichtung 14 ist im Ausführungsbeispiel als Glaswand ausgebildet, die über einen verschließbaren Ein- bzw. Ausgang zum inneren Bereich 5 verfügt. Demgegenüber ist der zweite Bereich 6 von außen frei zugänglich.

Der erste und zweite Bereich 5, 6 enthalten ein Logistiksystem 7, welches ein oder mehrere Förderbänder und mehrere schalenförmige Aufnahmevorrichtungen 8 (Lagerschalen 8) umfasst, die mittels der Förderbänder bewegt werden können.

Die Lagerschalen 8 des Logistiksystems 7 sind zur Aufnahme und Positionierung des Transportmoduls 4 und weiteren nicht dargestellten Transportmodulen vorgesehen.

Die Lagerschalen 8 und die aufgenommenen Transportmodule 4 können mittels des Förderbands des Logistiksystems 7 über verschieden ausgebildeten Förderlinien (Figur 2, 3) innerhalb des zweiten Bereichs 6 oder vom ersten Bereich 5 in den zweiten Bereich 6 oder umgekehrt bewegt werden.

Im ersten Bereich 5 kann eine Lagerschale 8 zur Aufnahme und Positionierung der Beförderungskapsel 19 des an- oder abzukuppelnden Transportmoduls 4 des startenden oder landenden Fluggeräts 2 temporär angeordnet werden, wobei diese Lagerschale 8 mittig in Bezug zum ersten Bereich und zum Fluggerät 2 positioniert ist. Demgegenüber sind im zweiten Bereich 6 mehrere Lagerschalen 8 konzentrisch um den ersten Bereich 5 beweglich angeordnet, die der Aufbewahrung von temporär nicht benötigten Transportmodule 4 (nicht dargestellt) dienen.

Die Form der Lagerschalen 8 folgt weitgehend der äußeren Kontur des unteren Bereiches der Beförderungskapsel 19 des Transportmodules 4, wobei diese die Beförderungskapsel 19 teilweise umschließen.

Zudem weisen die Lagerschalen 8 eine Einrichtung zur induktiven Ladung der Transportmodule 4 auf.

Die Start- und Landestation 1, wie beispielsweise vorstehend bezugnehmend auf Figur 2 bis 4 beschrieben, kann wie nachstehend beschrieben, zusammen mit dem modularen Fluggerät 2 gehandhabt werden.

Grundsätzlich ist vorgesehen, dass entweder ein Fluggerät 2, d. h. ein Flugmodul 3 mit angekuppeltem Transportmodul 4, oder ein Flugmodul 3 allein startet oder landet. Beim Start- und Landevorgang kann das Flugmodul 3 ein Orientierungs- und/oder Steuerungssystem der Start- und Landestation 1 nutzen, so dass ein präziser An- bzw. Abflug mit der erforderlichen Positionierung des Flugmoduls 3 bzw. Fluggeräts 2 gegenüber der Start- und Landestation 1 erreicht werden kann.

Vor dem Starten und nach dem Landen liegt das Flugmodul 3 mit seiner Tragwerksstruktur 16 auf den balkenförmigen Auflageelementen 11 auf. Die Verbindung von Flugmodul 3 und Transportmodul 4 kann bevorzugt im lastfreien Zustand erfolgen. Dazu kann das Transportmodul 4 mittels der vertikal verstellbaren Plattform 15 bezüglich des auf den balkenförmigen Auflageelementen 11 aufliegenden Flugmoduls 3 positioniert werden.

Vor der Kupplung des Flugmoduls 3 mit dem Transportmodul 4 positioniert das Logistiksystem 7 der Start- und Landestation 1 eine Lagerschale 8 mit einem Transportmodul 4 innerhalb des ersten Bereichs 5, um z. B. den Zu- oder Ausstieg oder ein Be- oder Entladen des Transportmoduls 4 zu ermöglichen und die genaue Position für die Kupplung mit dem Flugmodul 3 herzustellen.

Der Zu- oder Ausstieg oder das Be- oder Entladen des Transportmoduls 4 kann aber auch außerhalb des ersten Bereiches 5 während der Positionierung des Transportmoduls 4 mittels des Logistiksystems 7 im zweiten Bereich 6 erfolgen.

Nach der Kupplung des Flugmoduls 3 mit dem Transportmodul 4 wird der gemeinsame Start mit dem Flugmodul 3 vorbereitet und durchgeführt.

Während der Kupplungsprozess noch mit einer weitestgehend geschlossen gehaltenen Öffnung 22 erfolgen kann, wird die Öffnung 22 zum Starten und Landen des Fluggeräts 2 geöffnet.

Das Starten und Landen des Fluggeräts 2 sind bevorzugt nur möglich, wenn sich keinerlei unerlaubte Personen, z. B. Passagiere oder Bodenpersonal, Tiere oder lose Gegenstände, z. B. Ersatzteile, Bauteile, Werkzeuge etc., im ersten, durch die geschlossene Glaswand 14 getrennten Bereich 5 befinden. Dadurch kann das Herumwirbeln oder -schleudern von Gegenständen verhindert werden, so dass die Sicherheit in der Start- und Landestation erhöht wird.

Während des Startens des Fluggeräts 2 kann bereits ein weiteres Transportmodul 4 aus dem zweiten Bereich 6 für die Übergabe an den ersten Bereich 5 organisiert werden, um nach der erfolgten Landung eines weiteren Fluggerätes 2 oder eines Flugmoduls 3 den nächsten Kupplungs- und Startprozess im ersten Bereich 5 vorzubereiten.

Das Transportmodul 4 und die Start- und Landestation 1 können mittels einer zur systeminternen Kommunikation ausgebildeten Kommunikationseinrichtung miteinander kommunizieren.

Beispielsweise kann eine Statusmeldung des Transportmoduls 4 über einen Beladungs- und/oder Zustiegsstatus ausgetauscht werden. Außerdem kann das Transportmodul 4 eine Statusmeldung über das Erreichen eines Sicherungszustands kommunizieren, so dass eine Positionierung mittels des Logistiksystems 7 initiiert werden kann. Die Start- und Landestation 1 kann eine Statusmeldung über das Erreichen einer finalen Position Fluggeräts 2 oder des Transportmoduls 4 kommunizieren, um z. B. den Ein- und Ausstieg für Passagiere frei zu geben.

Ebenso kann vorgesehen sein, dass auch das Flugmodul 3 und die Start- und Landestation 1 mittels einer zur systeminternen Kommunikation ausgebildeten Kommunikationseinrichtung miteinander kommunizieren können. Beispielsweise kann eine Statusmeldung zur finalen, fixierten Position des Transportmoduls 4 an das Flugmodul 3 erfolgen, um die Möglichkeit des Ab- oder Ankuppelns vom bzw. an das Flugmodul 3 zu signalisieren.

Eine weitere Statusmeldung kann durch das Flugmodul 3 hinsichtlich des absolvierten An- oder Abkuppelns des Transportmoduls 4 erfolgen, um eine Startbereitschaft oder den Abschluss des Landevorgangs zu signalisieren.

Eine weitere Statusmeldung kann durch das Flugmodul 3 über das erfolgreiche Landen auf den Auflageelementen 11 der Haltevorrichtung 21 x und/oder über das Erreichen einer finalen Position des Fluggerätes 2 bzw. des Flugmoduls 3 in der Start- und Landestation 1 abgegeben werden, um z. B. ein Ein- oder Aussteigen der Passagiere oder ein Be- oder Entladen der Nutzlast freizugeben.

Eine weitere Statusmeldung kann die Unversehrtheit des ersten Bereichs 5 und/oder den Beladungsstatus, z. B. Gewicht, Verriegelung, Sicherung etc., des Transportmoduls 4 vermelden, so dass ein Start- oder Landevorgang gefahrlos eingeleitet werden kann.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Wird beispielsweise eine Beziehung beschrieben, welche die Komponenten A, B und/oder C, enthält, kann die Beziehung die Komponenten A alleine; B alleine; C alleine; A und B in Kombination; A und C in Kombination; B und C in Kombination; oder A, B, und C in Kombination enthalten.

### Bezugszeichenliste

- 1: Start- und Landestation
- 2: Fluggerät
- 3: Flugmodul
- 4: Transportmodul
- 5: erster Bereich
- 6: zweiter Bereich
- 7: Logistiksystem
- 8: Aufnahmevorrichtung, Lagerschale
- 9: Abschirmeinrichtung
- 10: Windleitlamellen
- 11: Auflageelement, gabelförmig, balkenförmig
- 12: Grundplatte
- 13: Säule, Ständer, säulenförmig, bogenförmig
- 14: Trenneinrichtung
- 15: vertikal verstellbare Plattform
- 16: Tragwerksstruktur
- 17: Antriebseinheit
- 18: Zentraleinheit
- 19: Beförderungskapsel
- 20: Verbindungseinrichtung
- 21: Halteeinrichtung
- 22: verschließbare Öffnung

## Patentansprüche

1. Start- und Landestation (1), ausgebildet zur Aufnahme und Halterung eines senkrecht startenden und landenden Fluggeräts (2) zum Transport von Personen und/oder Lasten, welches ein Flugmodul (3) mit mehreren an einer Tragwerksstruktur (16) des Flugmoduls (3) angeordnete Antriebseinheiten (17) und ein mit dem Flugmodul (3) kuppelbares Transportmodul (4) aufweist, wobei die Start- und Landestation (1) aufweist
- eine Haltevorrichtung (21) mit mehreren Greifer- oder Auflageelementen (11), ausgebildet zum Auflegen, Fixieren und/oder Ausrichten der Tragwerksstruktur (16) des Flugmoduls (3) beim Starten und Landen des Fluggerätes (2)oder des Flugmoduls (3), wobei einige oder alle Greifer- und Auflageelemente (11) für eine Auflage und teilweise seitliche Einfassung der Tragwerksbalken der Tragwerkstruktur (16) des Flugmoduls (3) gabelförmig und/oder für eine plane Auflage der Tragwerksbalken der Tragwerkstruktur (16) des Flugmoduls (3) balkenförmig ausgebildet sind und
- zumindest einen ersten Bereich (5), ausgebildet zur Anordnung und Lagerung des Transportmoduls (4) für das An- und Abkuppeln an das / von dem auf den Greifer- und Auflageelementen (11) aufliegenden Flugmodul(3),
**dadurch gekennzeichnet, dass** der erste Bereich (5) derart ausgebildet ist, dass das Transportmodul (4) auf einem Höhenniveau des umliegenden Geländes oder einer umliegenden Plattform anordenbar ist und der erste Bereich ein Ein- und Aussteigen von Personen in das bzw. aus dem Transportmodul (4) und ein Be- und Entladen des Transportmoduls (4) ermöglicht, wobei oberhalb des ersten Bereichs (5)eine Windleitlamellen (10) aufweisende Abschirmeinrichtung (9) angeordnet und an der Haltevorrichtung (21) befestigt ist, ausgebildet zur Abschirmung einer in der Start- und Landestation (1) befindlichen Beförderungskapsel (19) gegenüber dem Flugmodul (3), wobei die Windleitlamellen (10) derart angeordnet und ausgebildet sind, dass die von einem startenden oder landenden Flugmodul (3) bzw. Fluggerät (2) erzeugten Abwinde gezielt abgelenkt und abgeleitet werden.

2. Start- und Landestation (1) gemäß Anspruch 1, wobei die Haltevorrichtung (21) mehrere säulenförmige oder bogenförmige Ständer (13) aufweist, deren Länge verstellbar ausgebildet ist.

3. Start- und Landestation (1) gemäß Anspruch 2, wobei die Ständer und/oder die Greifer- und Auflageelemente (11) federnd ausgebildet sind.

4. Start- und Landestation (1) gemäß Anspruch 3, wobei die Federung mittels eines in den Ständer und/oder in das Greifer- und Auflageelemente (11) integriertes elastisches Federelement realisiert ist.

5. Start- und Landestation (1) gemäß einem der Ansprüche 1 bis 4, wobei der erste Bereich (5) wenigstens eine Aufnahmevorrichtung (8) zur Aufnahme und Positionierung eines Transportmoduls (4) oder einer Beförderungskapsel (19) des Transportmoduls (4)aufweist.

6. . Start- und Landestation (1) gemäß Anspruch 5, wobei die Aufnahmevorrichtung (8) als ringförmige oder oben offene schalenförmige Umfassung der Beförderungskapsel (19) ausgebildet ist, welche die Beförderungskapsel (19) des Transportmoduls (4) hält.

7. Start- und Landestation (1) gemäß Anspruch 5 oder 6, wobei die Form der Aufnahmevorrichtung (8) mit einer äußeren Form des Transportmoduls (4) oder der Beförderungskapsel (19) des Transportmoduls (4) korrespondierend ausgebildet ist.

8. Start- und Landestation (1) gemäß Anspruch 1 bis 7, wobei der erste Bereich (5) eine vertikal verstellbare Hubeinrichtung (15)zum Heben und Senken des Fluggerätes (2) und/oder des Transportmoduls (4) und/oder der Beförderungskapsel (19) mit einer Hubbewegung in Richtung der Greifer- und Auflageelemente (11) und zurück aufweist.

9. Start- und Landestation (1) einem der vorstehenden Ansprüche, wobei die eine Abschirmeinrichtung (9) eine verstellbare Öffnung (22) aufweist.

10. Start- und Landestation (1) gemäß einem der vorstehenden Ansprüche, wobei die Start- und Landestation (1) einen zweiten Bereich (6), ausgebildet zur Aufbewahrung eines oder mehrerer Transportmodule (4) oder eines oder mehrerer Beförderungskapseln (19), aufweist.

11. Start- und Landestation (1) gemäß Anspruch 10, wobei der erste und zweite Bereich (5, 6) direkt aneinander angrenzen, wobei vorzugsweise der zweite Bereich (6) den ersten Bereich (5) teilweise oder vollständig umschließt.

12. Start- und Landestation (1) gemäß einem der Ansprüche 10 oder 11, wobei der erste Bereich (5) gegenüber dem zweiten Bereich (6) mittels einer verschließbaren Trenneinrichtung (14) abtrennbar ist.

13. Start- und Landestation (1) gemäß einem der Ansprüche 10 bis 12, wobei der erste Bereich (5) gegenüber dem zweiten Bereich (6) vertikal verstellbar ausgebildet ist und/oder wobei der zweite Bereich (6) gegenüber dem ersten Bereich (5) horizontal verstellbar ausgebildet ist.

14. Start- und Landestation (1) gemäß einem der vorstehenden Ansprüche, wobei die Start- und Landestation (1) ein Logistiksystem (7) zum Organisieren der Transportmodule (4) oder der Beförderungskapseln (19) im ersten (5) und/oder zweiten Bereich (6) aufweist, wobei das Logistiksystem (7) ein Förderband oder eine Förderschiene zur Beförderung der Transportmodule (4) bzw. der Beförderungskapseln (19) und/oder mehrere Aufnahmevorrichtungen (8) zur Aufnahme und Positionierung der Transportmodule (4) bzw. der Beförderungskapseln (19)aufweist.

15. Start- und Landestation (1) gemäß einem der Ansprüche 10 bis 14, wobei die Aufnahmevorrichtungen (8) im zweiten Bereich (6) konzentrisch um einen Mittelpunkt oder einer Mittelachse des ersten Bereichs (5) anordenbar und förderbar und/oder zwischen dem ersten Bereich (5) und dem zweiten Bereich (6) förderbar sind.

## Claims

1. Take-off and landing station (1), designed to receive and support a vertical take-off and landing aircraft (2) for the transport of persons and/or cargo, comprising a flight module (3) with a plurality of propulsion units (17) arranged on a supporting structure (16) of the flight module (3) and a transport module (4) capable of being coupled to the flight module (3), wherein the take-off and landing station (1) comprises
- a holding device (21) with a plurality of gripping or seating elements (11), designed to seat, secure and/or align the supporting structure (16) of the flight module (3) during take-off and landing of the aircraft (2) or flight module (3), whereby some or all of the gripping and seating elements (11) are fork-shaped for seating and partially encasing the support beams of the supporting structure (16) of the flight module (3) and/or beam-shaped for flat seating of the support beams of the supporting structure (16) of the flight module (3), and
- at least one first section (5), designed to accommodate and support the transport module (4) for coupling to and uncoupling from the flight module (3) resting on the gripping and seating elements (11), **characterised in that** the first section (5) is designed such that the transport module (4) can be positioned at the same height as the surrounding terrain or a surrounding platform, and the first section allows persons to board and alight from the transport module
(4) and enables the transport module (4) to be loaded and unloaded, wherein, above the first section (5), a shielding device (9) with wind deflector vanes (10) is arranged and secured to the holding device (21), designed to shield a transport capsule (19) located in the take-off and landing station (1) from the flight module (3), wherein the wind deflector vanes (10) are arranged and designed in such a way that the downdrafts generated by a flight module (3) or aircraft (2) taking off or landing are specifically deflected and diverted.

2. Take-off and landing station (1) according to claim 1, wherein the holding device (21) comprises a plurality of column-shaped or arch-shaped supports (13), the length of which is adjustable.

3. Take-off and landing station (1) according to claim 2, wherein the supports and/or the gripping and seating elements (11) have spring-loaded suspension.

4. Take-off and landing station (1) according to claim 3, wherein the suspension is provided by means of an elastic spring element integrated into the supports and/or into the gripping and seating elements (11).

5. Take-off and landing station (1) according to any one of claims 1 to 4, wherein the first section (5) comprises at least one receiving device (8) for receiving and positioning a transport module (4) or a transport capsule (19) of the transport module (4).

6. . Take-off and landing station (1) according to claim 5, wherein the receiving device (8) is designed as a ring-shaped or open-topped, bowl-shaped enclosure for the transport capsule (19), which holds the transport capsule (19) of the transport module (4).

7. Take-off and landing station (1) according to claim 5 or 6, wherein the shape of the receiving device (8) is designed to correspond to an external shape of the transport module (4) or the transport capsule (19) of the transport module (4).

8. Take-off and landing station (1) according to claims 1 to 7, wherein the first section (5) comprises a vertically adjustable lifting device (15) for raising and lowering the aircraft (2) and/or the transport module (4) and/or the transport capsule (19) by means of a lifting movement towards the gripping and seating elements (11) and back again.

9. Take-off and landing station (1) according to one of the preceding claims, wherein the single shielding device (9) has an adjustable opening (22).

10. Take-off and landing station (1) according to one of the preceding claims, wherein the take-off and landing station (1) comprises a second section (6) designed to store one or more transport modules (4) or one or more transport capsules (19).

11. Take-off and landing station (1) according to claim 10, wherein the first and second sections (5, 6) are directly adjacent to one another, and wherein, preferably, the second section (6) partially or completely encloses the first section (5).

12. Take-off and landing station (1) according to one of claims 10 or 11, wherein the first section (5) can be separated from the second section (6) by means of a closable partition (14).

13. Take-off and landing station (1) according to one of claims 10 to 12, wherein the first section (5) is designed to be vertically adjustable relative to the second section (6) and/or wherein the second section (6) is designed to be horizontally adjustable relative to the first section (5).

14. Take-off and landing station (1) according to one of the preceding claims, wherein the take-off and landing station (1) comprises a logistics system (7) for organising the transport modules (4) or
transport capsules (19) in the first (5) and/or second section (6), wherein the logistics system (7) comprises a conveyor belt or a conveyor rail for conveying the transport modules (4) or the transport capsules (19), and/or a plurality of receiving devices (8) for receiving and positioning the transport modules (4) or the transport capsules (19).

15. Take-off and landing station (1) according to one of claims 10 to 14, wherein the receiving devices (8) in the second section (6) can be arranged and conveyed concentrically about a centre point or a central axis of the first section (5) and/or can be conveyed between the first section (5) and the second section (6).

## Revendications

1. Station de décollage et d'atterrissage (1), configurée pour recevoir et retenir un aéronef (2) décollant et atterrissant à la verticale, destiné au transport de personnes et/ou de charges, lequel aéronef comprend un module de vol (3) comportant plusieurs unités de propulsion (17) disposées sur une structure porteuse (16) du module de vol (3), et un module de transport (4) pouvant être accouplé au module de vol (3), sachant que la station de décollage et d'atterrissage (1) comporte
- un dispositif de retenue (21) équipé de plusieurs éléments de préhension ou d'appui (11) conçus pour appuyer, immobiliser et/ou aligner la structure porteuse (16) du module de vol (3) lors du décollage et de l'atterrissage de l'aéronef (2) ou du module de vol (3), sachant que certains ou tous les éléments de préhension et d'appui (11) sont configurés - pour assurer l'appui et, en partie, l'encadrement latéral des poutres structurelles de la structure porteuse (16) du module de vol (3)
- en forme de fourche et/ou en forme de poutre pour une appui plan des poutres structurelles de la structure porteuse (16) du module de vol (3), et
- au moins une première zone (5) configurée pour le positionnement et le logement du module de transport (4) en vue de son couplage au, et de son découplage du, module de vol (3) reposant sur les éléments de préhension et d'appui (11), **caractérisée en ce que** la première zone (5) est configurée de telle sorte que le module de transport (4) puisse être positionné au même niveau que le terrain environnant ou qu'une plateforme environnante, et que la première zone permette l'embarquement de personnes dans le module de transport et leur débarquement dudit module
(4) et permet le chargement et le déchargement du module de transport (4), sachant qu'est disposé au-dessus de la première zone (5) un dispositif de protection (9) comportant des ailettes de déflexion du vent (10) et fixé au dispositif de retenue (21), configuré pour protéger une capsule de transport (19), située dans la station de décollage et d'atterrissage (1), par rapport au module de vol (3), sachant que les ailettes de déflexion du vent (10) sont disposées et configurées de sorte que les courants descendants générés par un module de vol (3) ou un aéronef (2) au décollage ou à l'atterrissage soient déviés et évacués de manière ciblée.

2. Station de décollage et d'atterrissage (1) selon la revendication 1, dans laquelle le dispositif de retenue (21) comporte plusieurs montants (13) en forme de colonne ou d'arc, dont la longueur est configurée pour être réglable.

3. Station de décollage et d'atterrissage (1) selon la revendication 2, dans laquelle les montants et/ou les éléments de préhension et d'appui (11) sont configurés de façon élastique.

4. Station de décollage et d'atterrissage (1) selon la revendication 3, dans laquelle la suspension est réalisée au moyen d'un élément ressort élastique intégré dans le montant et/ou dans les éléments de préhension et d'appui (11).

5. Station de décollage et d'atterrissage (1) selon l'une des revendications 1 à 4, dans laquelle la première zone (5) comporte au moins un dispositif de réception (8) destiné à recevoir et à positionner un module de transport (4) ou une capsule de transport (19) du module de transport (4).

6. . Station de décollage et d'atterrissage (1) selon la revendication 5, dans laquelle le dispositif de réception (8) est configuré en forme d'enceinte annulaire ou en forme de coque ouverte au sommet de la capsule de transport (19), qui retient la capsule de transport (19) du module de transport (4).

7. Station de décollage et d'atterrissage (1) selon la revendication 5 ou 6, dans laquelle la forme du dispositif de réception (8) est configurée de manière à épouser une forme extérieure du module de transport (4) ou de la capsule de transport (19) du module de transport (4).

8. Station de décollage et d'atterrissage (1) selon les revendications 1 à 7, dans laquelle la première zone (5) comporte un dispositif de levage (15) réglable verticalement et permettant de soulever et d'abaisser l'aéronef (2) et/ou le module de transport (4) et/ou la capsule de transport (19) par un mouvement de levage en direction des éléments de préhension et d'appui (11) et par un mouvement inverse.

9. Station de décollage et d'atterrissage (1) selon l'une des revendications précédentes, dans laquelle ledit dispositif de protection (9) comporte une ouverture réglable (22).

10. Station de décollage et d'atterrissage (1) selon l'une des revendications précédentes, dans laquelle la station de décollage et d'atterrissage (1) comporte une deuxième zone (6) configurée pour le stockage d'un ou plusieurs modules de transport (4) ou d'une ou plusieurs capsules de transport (19).

11. Station de décollage et d'atterrissage (1) selon la revendication 10, dans laquelle les première et deuxième zones (5, 6) sont directement contiguës, sachant que la deuxième zone (6) entoure de préférence partiellement ou entièrement la première zone (5).

12. Station de décollage et d'atterrissage (1) selon l'une des revendications 10 ou 11, dans laquelle la première zone (5) peut être séparée de la deuxième zone (6) au moyen d'un dispositif de séparation (14) obturable.

13. Station de décollage et d'atterrissage (1) selon l'une des revendications 10 à 12, dans laquelle la première zone (5) est configurée pour être réglable verticalement par rapport à la deuxième zone (6) et/ou dans laquelle la deuxième zone (6) est configurée pour être réglable horizontalement par rapport à la première zone (5).

14. Station de décollage et d'atterrissage (1) selon l'une des revendications précédentes, dans laquelle la station de décollage et d'atterrissage (1) comprend un système logistique (7) destiné à organiser les modules de transport (4) ou les capsules de transport (19) dans la première zone (5) et/ou la deuxième zone (6), sachant que le système logistique (7) comporte un tapis roulant ou un rail de transport pour acheminer les modules de transport (4) ou les capsules de transport (19) et/ou plusieurs dispositifs de réception (8) destinés à recevoir et à positionner les modules de transport (4) ou les capsules de transport (19).

15. Station de décollage et d'atterrissage (1) selon l'une des revendications 10 à 14, dans laquelle les dispositifs de réception (8) peuvent être disposés et acheminés dans la deuxième zone (6) de manière concentrique autour d'un point central ou d'un axe central de la première zone (5) et/ou peuvent être acheminés entre la première zone (5) et la deuxième zone (6).
